(19) Europäisches Patentamt

European Patent Office

Office européen des brevets

(11) EP 0 576 705 B1

(12) EUROPÄISCHE PATENTSCHRIFT

(45) Veröffentlichungstag und Bekanntmachung des Hinweises auf die Patenterteilung:
27.03.1996 Patentblatt 1996/13

(51) Int Cl.⁶: **F02P 11/06**, F02P 17/00

(21) Anmeldenummer: **92111078.9**

(22) Anmeldetag: **30.06.1992**

(54) **Verfahren zur Erkennung von Verbrennungsaussetzern**

Method for detecting misfire

Procédé pour la détection de ratés de combustion

(84) Benannte Vertragsstaaten:
**DE FR GB IT**

(43) Veröffentlichungstag der Anmeldung:
**05.01.1994   Patentblatt 1994/01**

(73) Patentinhaber: **SIEMENS AKTIENGESELLSCHAFT**
**D-80333 München (DE)**

(72) Erfinder:
• **Angermaier, Anton, Dipl.-Ing.**
**W-8300 Landshut (DE)**
• **Wier, Manfred, Dr.-Ing.**
**W-8411 Wenzenbach (DE)**
• **Vogt, Thomas, Dipl.-Ing.**
**W-8400 Regensburg (DE)**

(56) Entgegenhaltungen:
**WO-A-92/09875**          **DE-C- 4 001 333**

• **SAE TECHNICAL PAPER NR. 900232, 1990, WARRENDALE, USA, Seiten 9-20; G. PLAPP, M. KLENK, W. MOSER: "methods of on-board misfire detection"**

## Beschreibung

Die Erfindung betrifft ein Verfahren zur Erkennung von Verbrennungsaussetzern in Mehrzylinderbrennkraftmaschinen.

Verbrennungsaussetzer können bei Brennkraftmaschinen mit nachgeschaltetem Abgaskatalysator zur Schädigung des Katalysators führen, da durch Nachreaktionen des unverbrannten Kraftstoff-Luftgemisches im Katalysator hohe Temperaturen auftreten. Unabhängig von der Verwendung eines Katalysators wird durch Verbrennungsaussetzer die Abgasqualität verschlechtert.

Es sind bereits Verfahren bekannt, die zur Erkennung von Verbrennungsaussetzern die momentane Winkelgeschwindigkeit der Kurbelwelle messen. Es wird dabei die Zeitspanne gemessen während deren sich die Kurbelwelle um eine definierte Winkelspanne dreht. Die Zeitmessung erfolgt dabei üblicherweise mit Hilfe von Markierungen an einem an der Kurbelwelle angebrachten Rad. Die Differenz gemessener aufeinanderfolgender Zeitspannen wird mit einem Grenzwert verglichen. Verbrennungsaussetzer führen zu einer vorübergehenden Verlangsamung der Winkelgeschwindigkeit der Kurbelwelle, da der Energieanteil des aussetzenden Zylinders zum Antrieb der Kurbelwelle fehlt. Bei einer Verlangsamung der Winkelgeschwindigkeit erhöht sich die Differenz gemessener aufeinanderfolgender Zeitspannen. Bei Überschreiten eines vorgebbaren Grenzwertes wird somit ein Zündaussetzer erkannt und angezeigt. Gegebenenfalls können dann steuernde Maßnahmen ergriffen werden, wie z.B. die Abschaltung der betreffenden Einspritzdüse.

Ein Hauptnachteil der bekannten Verfahren besteht darin, daß sie nur für den Stationärbetrieb mit konstanter Geschwindigkeit ohne Abbremsen und Beschleunigen geeignet sind. Beim Abbremsen beispielsweise verringert sich die Winkelgeschwindigkeit der Kurbelwelle. Die gemessene Zeitspanne und die Differenz aufeinanderfolgender Zeitspannen werden größer und sobald dieser Zeitspannenzuwachs einen Grenzwert übersteigt, wird ein Verbrennungsaussetzer angezeigt. Dabei hat gar kein Aussetzer stattgefunden, sondern es lag nur ein ganz normales Abbremsen vor. In der DE-A-40 09 285 wird ein Verfahren beschrieben, das diesen Nachteil vermeidet.

Bei dem dort beschriebenen Verfahren wird neben der statischen Komponente auch eine dynamische Komponente berechnet, die den mittleren linearen Geschwindigkeitszuwachs (Beschleunigung) bzw. den mittleren linearen Geschwindigkeitsabfall (Verzögerung) berücksichtigt. Die dynamische Komponente wird berechnet, indem man die Zeitspannen mehrerer aufeinanderfolgender aber zeitlich weiter auseinanderliegenden Zylindern miteinander vergleicht. Subtrahiert man nun die dynamische Komponente von der statischen Komponente, wird damit der Einfluß der Geschwindigkeitsänderungen auf die gemessenen Zeitspannen kompensiert. Die verbleibenden Änderungen der Zeitspannen rühren nun tatsächlich überwiegend von Verbrennungsaussetzern her.

Nachteilig an diesem dort beschriebenen Verfahren ist, daß es sich für den stark instationären Fahrbetrieb ebenfalls nicht eignet, da es nur die Einflüsse konstanter Beschleunigung bzw. konstanter Verzögerung kompensieren kann. Solche Fahrzustände sind im Alltagsbetrieb eines Kraftfahrzeuges aber eher die Ausnahme. Hier herrschen vielmehr meist stark instationäre Verhältnisse, wie z.B. eine ungleichmäßige Verzögerung, eine ungleichmäßige Beschleunigung, ein oft abrupter Wechsel von Beschleunigung und Verzögerung oder gar ganz harte Geschwindigkeitsänderungen, z.B. beim schnellen Ein- und Auskuppeln, vor.

In SAE-Technical Paper No. 900232, 1990, Warrendale USA; Seite 9 bis 20, G. Plapp, M. Klenk und W. Moser: "Methods of On-Board Misfire Detection" sind verschiedene Verfahren zur Erkennung von Zündaussetzern, insbesondere über ein Laufunruhesignal beschrieben. Dabei werden entweder Winkelgeschwindigkeiten aufeinanderfolgender Zylinder (stationärer Betriebszustand) verglichen oder Winkelbeschleunigungen aufeinanderfolgender Zylinder auch bei Instationärbetrieb miteinander verglichen und in Abhängigkeit von vorgebenen Grenzwerten entschieden, ob Verbrennungsaussetzer stattgefunden haben oder nicht. Die Grenzwerte sind dabei Abhängigkeit von Drehzahl und Last festgesetzt.

Vorliegender Erfindung liegt die Aufgabe zugrunde, ein Verfahren anzugeben, mit dem eine zuverlässige Verbrennungsaussetzungserkennung auch noch in stark instationären Betriebszuständen möglich ist.

Ein Verfahren zur Lösung dieser Aufgabe ist in Anspruch 1 der vorliegenden Erfindung angegeben. Die Unteransprüche beschreiben bevorzugte Weiterbildungen dieses Verfahrens. Das erfindungsgemäße Verfahren enthält neben der zuvor beschriebenen statischen Komponente und der die allgemeine Drehzahltendenz berücksichtigenden dynamischen Komponente zusätzlich eine sogenannte Änderungskomponente mit der Beschleunigungs- und Verzögerungsänderungen berücksichtigt werden können. Zur Berechnung dieser Änderungskomponente werden nicht die Differenz der Zeitspannen direkt aufeinanderfolgender Zylinder miteinander verglichen, sondern die Differenz der Zeitspannen weiter auseinanderliegender Zylinder. Dieser hierbei erhaltene Wert wird zusätzlich gewichtet und geht erst in Form einer gleitenden Mittelung in das erfindungsgemäße Verfahren ein. Das Verfahren wird im folgenden anhand der Zeichnungsfiguren näher beschrieben. Es zeigen:

Figur 1    eine schematische Darstellung der Verfahrensschritte eines Ausführungsbeispiels des erfindungsgemäßen Verfahrens,

Figur 2    die Simulation eines stark instationären Fahrbetriebs mit fünf Verbrennungsaussetzern.

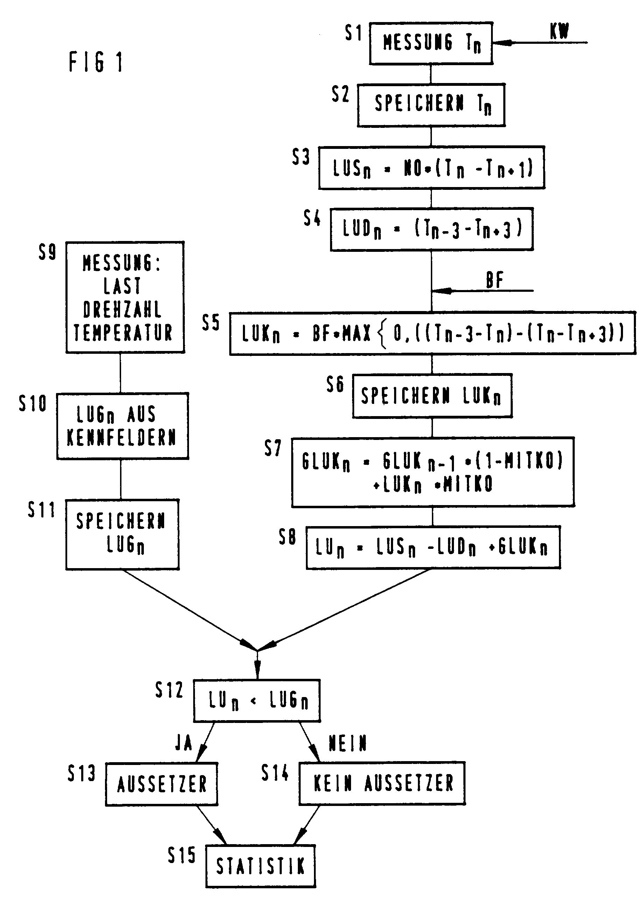

In Figur 1 ist ein erfindungsgemäßes Verfahren am Beispiel eines Sechs-Zylinder-Motors dargestellt.

Im Verfahrensschritt S1 werden anhand von Markierungen auf der Kurbelwelle die Zeitspannen $T_n$ gemessen, die die Kurbelwelle braucht, um sich während des Arbeitstakts eines Zylinders um einen bestimmten Kurbelwinkel zu drehen, hier beispielhaft 120° Kurbelwinkel.

Die laufend gemessenen Werte werden im Verfahrensschritt S2 zwischengespeichert.

Im Verfahrensschritt S3 wird aus jeweils zwei aufeinanderfolgenden Zeitspannen $T_n$, $T_{n+1}$ die statische Komponente $LUS_n$ berechnet.

Der hier verwendete Normierungsfaktor NO ist abhängig vom Meßfenster (n-x bis n+y), das im Verfahrensschritt S4 bei der Berechnung der dynamischen Komponente Verwendung findet. Er berechnet sich nach der Gleichung NO = x+y, also hier im Ausführungsbeispiel NO = 3+3 = 6.

Im Verfahrensschritt S4 wird die dynamische Komponente $LUD_n$ berechnet, indem die Differenz weiter auseinanderliegender Zeitspannen gebildet wird. Hier im Ausführungsbeispiel wird die drittvorletzte $T_{n-3}$ bzw. die drittnächste $T_{n+3}$ Zeitspanne bezogen auf die aktuelle Zeitspanne $T_n$ verwendet. Es könnte hier auch ein bzgl. der aktuellen Zeitspanne $T_n$ unsymmetrisch gelegtes Meßfenster verwendet werden. Die dynamische Komponente $LUD_n$ wird anschließend negiert.

Im Verfahrensschritt S5 wird die Änderungskomponente $LUK_n$ berechnet. Es werden symmetrisch zur aktuellen Zeitspanne $T_n$ zwei Differenzwerte gebildet, hier im Ausführungsbeispiel $T_{n-3} - T_n$ und $T_n - T_{n+3}$. Aus diesen zwei Werten wird wiederum eine Differenz gebildet und diese, sofern sie größer Null ist, mit einem Bewertungsfaktor BF gewichtet. Ist diese Differenz kleiner Null, so wird sie zu Null gesetzt.

Die so berechnete Änderungskomponente $LUK_n$ wird im Verfahrensschritt S6 zwischengespeichert, um sie im Verfahrensschritt S7 einer gleitenden Mittelung zu unterziehen, hier beispielsweise nach der Formel:

$$GLUK_n = GLUK_{n-1} * (1-MITKO) + LUK_n * MITKO,$$

wobei MITKO eine Mittelungskonstante mit einem Wertebereich zwischen 0 und 1 darstellt.

Die Meßfenster (n, n-x, n+y, n-z, n+z) bei der Berechnung der dynmamischen Komponente und der Änderungskomponente werden vorteilhafterweise so gewählt, daß bei den entsprechenden Zylindern n, n-x, n+y, n-z, n+z die Zeitspanne desselben mechanischen Segments der Kurbelwelle gemessen wird. Eine eventuell vorhandene Ungleichheit der Größe der einzelnen Kurbelwellensegmente verursacht dann keinen Meßfehler.

Zweckmäßigerweise werden die Winkelspanne der Kurbelwelle über der die Zeitspannen gemessen werden bezüglich des oberen Totpunkts der Bewegung des zugehörigen Kolbens so gewählt, daß sie den Bereich des maximalen Signalhubs überspannen. Ein Verbrennungsaussetzer zeigt somit deutlichere Auswirkungen. Da diese Winkelbereiche last- und drehzahlabhängig sind, wird diese Optimierung beim ungünstigsten Betriebspunkt (hohe Drehzahl und niedrige Last) vorgenommen, damit auch in diesem Bereich noch ein ausreichend großer Signalhub vorhanden ist.

Aus diesen einzelnen Komponenten wird nun im Verfahrensschritt S8 der Laufunruhewert für die betrachtete Zeitspanne $T_n$ durch eine Addition der einzelnen Komponenten gebildet.

Zur Zeitspanne $T_n$ wurden gleichzeitig im Verfahrensschritt S9 die Last, die Drehzahl und die Temperatur der Brennkraftmaschine gemessen. Entsprechend diesen Kenngrößen wurde im Verfahrensschritt S10 aus zugehörigen Kennfeldern ein Grenzwert der Laufunruhe $LUG_n$ entnommen und im Verfahrensschritt S11 zwischengespeichert.

Durch die Zwischenspeicherung der Werte, ist es im Verfahrensschritt S12 nun möglich den Grenzwert der Laufunruhe $LUG_n$ der Zeitspanne $T_n$ mit dem für dieselbe Zeitspanne berechneten Laufunruhewert $LU_n$ zu vergleichen.

Ist der Laufunruhewert $LU_n$ kleiner als der Grenzwert der Laufunruhe $LUG_n$, so wird im Verfahrensschritt S13 ein Verbrennungsaussetzer registriert. Ist $LU_n$ größer oder gleich $LUG_n$ wird kein Aussetzer registriert (Verfahrensschritt S14). Beide Fälle werden im Verfahrensschritt S15 einer statistischen Auswertung zugeführt, da bei einzelnen erkannten Verbrennungsaussetzern noch keine steuernden Maßnahmen, wie das Abschalten von Einspritzdüsen, ergriffen werden, sondern erst wenn die statistische Häufigkeit solcher Verbrennungsaussetzer eine bestimmte Grenze überschreitet.

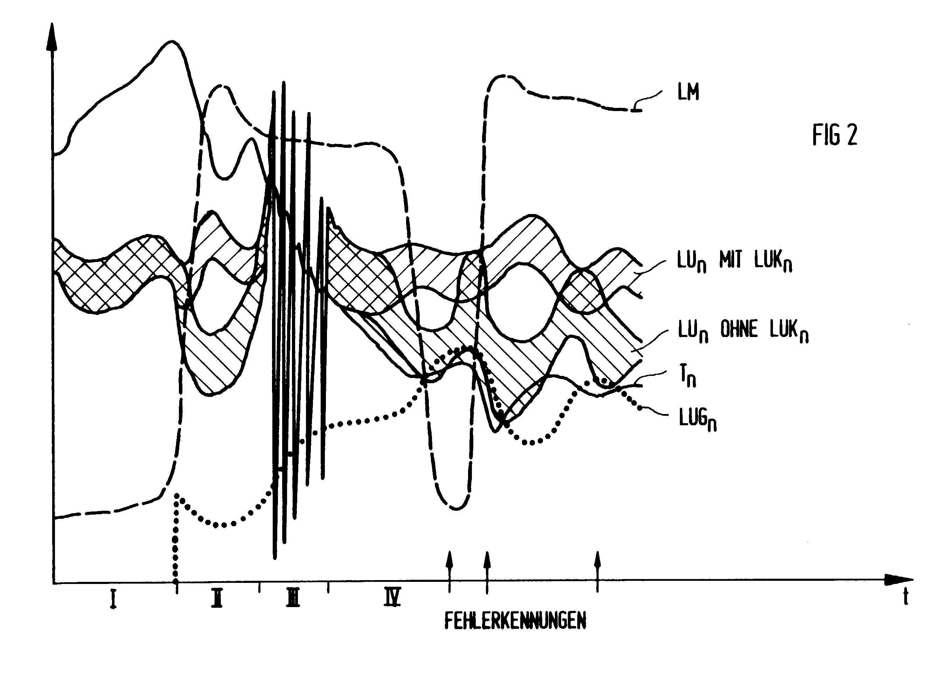

In Figur 2 sind für einen stark instationären Fahrbetrieb die zeitlichen Verläufe der gemessenen Größen Luftmasse LM und Zeitspanne $T_n$ der Kurbelwellenumdrehung sowie der dazu berechnete Laufunruhewert $LU_n$ (mit und ohne Änderungskomponente $LUK_n$) dargestellt. Außerdem ist der Kennfeldern betriebsgrößenabhängig entnommene Grenzwert der Laufunruhe $LUG_n$ dargestellt.

Es lassen sich zeitlich verschiedene Betriebsbereiche unterscheiden. Im Bereich I liegt Schubabschaltung vor, die Kraftstoffeinspritzung ist abgeschaltet, es findet keine Verbrennungsaussetzererkennung statt.

Im Bereich II hat der Fahrer das Gaspedal schnell durchgetreten, was einen Luftmassenstoß zur Folge hat, was am starken Ansteigen und einem oberen Überschwingen der gestrichelt dargestellten LM-Kurve erkennbar ist. Die Drehzahl nimmt mit entsprechenden Schwankungen zu, die gemessenen Zeitspannen $T_n$ der Kurbelwellenumdrehungen werden kleiner, was an einem Abfallen der durchgezogenen dargestellten $T_n$-Kurve erkennbar ist.

Die beiden schraffierten Kurvenbänder stellen den berechneten Laufunruhewert $LU_n$ dar. Er schwankt dabei innerhalb der Grenzen der angegebenen Streubänder.

Dabei ist zum Vergleich einmal der Laufunruhewert ohne die Änderungskomponente $LUK_n$ dargestellt (die weiter unten verlaufende Kurve mit nach links fallender Schraffur) und einmal der Laufunruhewert mit der Änderungskomponente (weiter oben verlaufende Kurve mit nach rechts fallender Schraffur). Die überschnittenen Flächen sind an der Kreuzschraffur erkenntlich. Die beiden Kurven des Laufunruhewerts weichen im Bereich II voneinander ab. Sie bleiben aber beide noch oberhalb des aus Kennfeldern entnommenen Grenzwerts der Laufunruhe $LUG_n$ (untere punktierte Linie). Dieser instationäre Betriebsbereich löst also keine Fehlerkennungen aus. Dabei hält die obere Kurve, d.h. die Kurve des Laufunruhewerts mit der Änderungskomponente einen größeren Störabstand von der Kurve des Grenzwerts der Laufunruhe $LUG_n$ ein, als die untere Kurve, d.h. die Kurve des Laufunruhewerts ohne Änderungskomponente. Dieser größere Störabstand hilft Fehlerkennungen mit größerer Wahrscheinlichkeit auszuschließen.

Im nächsten Bereich, dem Bereich III, wurden fünf Verbrennungsaussetzer erzeugt. Beide Kurven des Laufunruhewerts nehmen so große Schwankungen an, daß sie unter die Kurve des Grenzwerts $LUG_n$ absinken, womit diese fünf Verbrennungsaussetzer erkannt werden. Dies geschieht bei weiter stark instationärem Betrieb, ersichtlich an der abfallenden Kurve der Zeitspannen $T_n$. Diese Kurve weist zusätzlich kleine Zacken nach oben auf, die gut erkennen lassen, wie die Verbrennungsaussetzer zu einer kurzzeitigen Verlangsamung der Winkelgeschwindigkeit der Kurbelwelle führen und damit zu einer Verlängerung der Zeitspannen $T_n$.

Der anschließende Bereich IV zeigt wiederum einen stark instationären Betriebsbereich an. Er ist gekennzeichnet durch ein abruptes Wegnehmen des Gases und ein anschließendes ebenso ruckartiges erneutes Gasgeben. Erkenntlich ist dies an dem steilen Einbruch der Luftmassenkurve LM. Die Kurve der Zeitspannen $T_n$ nimmt mit starken Schwankungen ebenfalls ab. Die beiden Laufunruhewertskurven LU weichen wieder voneinander ab. Die untere Kurve, also die Kurve des Laufunruhewerts ohne die Änderungskomponente $LUK_n$, gelangt dabei mehrmals unterhalb die Kurve des Grenzwerts $LUG_n$. Bei jedem Unterschreiten dieser Kurve wird fälschlicherweise ein Verbrennungsaussetzer erkannt. Betrachtet man hingegen in diesem Bereich die obere Laufunruhekurve, bei der die Änderungskomponente $LUK_n$ mit berücksichtigt ist, so wird deutlich, daß diese dadurch daß sie weiter oben verläuft, nicht unterhalb die Kurve des Grenzwerts der Laufunruhe $LUG_n$ gerät. Fehlerkennungen werden somit auch in diesem stark instationären Betriebsfall zuverlässig vermieden.

**Patentansprüche**

1. Verfahren zur Erkennung von Verbrennungsaussetzern bei einer Mehrzylinder-Brennkraftmaschine durch Messung der aufeinanderfolgenden Zeitspannen (...Tn-1, Tn, $T_{n+1}$...), die die Kurbelwelle während der Arbeitstakte der aufeinanderfolgenden Zylinder (...n-1, n, n+1...) zum Durchlaufen vorgegebenen Winkelspannen (KW) benötigt,
   **dadurch gekennzeichnet**, daß ein Laufunruhewert (LUn) ermittelt wird, der sich additiv zusammensetzt:

   - aus einer statischen Komponente (LUSn), die man erhält, indem man von der Zeitspanne (Tn) des zu untersuchenden Zylinders (n), die Zeitspanne ($T_{n+1}$) eines in Zündreihenfolge nachfolgenden Zylinders (n+1) abzieht, wobei diese Differenz noch mit einem Normierungsfaktor (NO) multipliziert wird,
   - aus einer dynamischen Komponente (LUDn), die man erhält, indem man von der Zeitspanne (Tn-x) eines in Zündfolge vorhergehenden Zylinders (n-x) die Zeitspanne (Tn+y) eines in der Zündfolge nachfolgenden Zylinders (n+y) abzieht und das Vorzeichen dieser Differenz anschließend negiert, wobei die Werte x, y, z natürliche Zahlen > 1 darstellen und ein Meßfenster (n-x bis n+y) bestimmen,
   - aus einer Änderungskomponente (GLUKn), die man erhält, indem man den Wert (Tn-z - Tn) - (Tn - Tn+z) berechnet und mit einem Bewertungsfaktor (BF) multipliziert, wobei dieser ermittelte Wert (LUKn) null gesetzt wird, sofern er negativ ist, anschließend dieser Wert (LUKn) einer gleitenden Mittelung unterzogen wird (GLUKn) und ein Verbrennungsaussetzer erkannt wird, wenn dieser Laufunruhewert (LUn) einen Grenzwert (LUGn) unterschreitet.

2. Verfahren nach Anspruch 1,
   **dadurch gekennzeichnet**, daß die Grenzwerte ($LUG_n$) Kennfeldern entnommen werden in Abhängigkeit von der Last, der Drehzahl und der Temperatur der Brennkraftmaschine.

3. Verfahren nach Anspruch 2,
   **dadurch gekennzeichnet**, daß die Grenzwerte ($LUG_n$) nach dem Auslesen aus den Kennfeldern zwischengespeichert werden, so daß ein Vergleich des für die Zeitspanne ($T_n$) berechneten Laufunruhewerts ($LU_n$) mit dem für dieselbe Zeitspanne ausgelesenen Grenzwert der Laufunruhe ($LUG_n$) erfolgt.

4. Verfahren nach einem der vorhergehenden Ansprüche,
   **dadurch gekennzeichnet**, daß die Änderungskomponente des Laufunruhewerts ($GLUK_n$) einer gleitenden Mittelung unterzogen wird nach der Formel:

$$GLUK_n = GLUK_{n-1} * (1\text{-}MITKO) + LUK_n * MITKO,$$

wobei MITKO eine Mittelungskonstante mit einem Wertebereich zwischen 0 und 1 darstellt.

5. Verfahren nach einem der vorhergehenden Ansprüche,
**dadurch gekennzeichnet**, daß sich der Normierungsfaktor (NO) der statischen Komponente berechnet in Abhängigkeit des Meßfensters (n-x bis n+y) der dynamischen Komponente nach der Formel NO = x+y.

6. Verfahren nach einem der vorhergehenden Ansprüche,
**dadurch gekennzeichnet**, daß das Meßfenster (n, n-x, n+y, n-z, n+z) bei der Berechnung der dynamischen Komponente und der Änderungskomponente so gewählt wird, daß bei Zylinder n, n-x, n+y, n-z, n+z die Zeitspanne desselben mechanischen Segments der Kurbelwellen gemessen wird.

7. Verfahren nach einem der vorhergehenden Ansprüche,
**dadurch gekennzeichnet**, daß die Winkelspanne der Kurbelwelle über der die Zeitspannen gemessen werden bezüglich des oberen Totpunkts der Bewegung des zugehörigen Kolbens so gewählt ist, daß sie bei ungünstigem Betriebspunkt einen maximalen Signalhub bei Verbrennungsaussetzern liefert.

**Claims**

1. Method for detecting combustion failures in a multi-cylinder internal combustion engine by measuring the successive time periods (...Tn-1, Tn, Tn+1...) required by the crankshaft to travel through predetermined angular ranges (KW) during the power strokes of the successive cylinders (...n-1, n, n+1...), characterized in that a lack-of-smoothness value (LUn) is determined, being composed by addition:

   - from a static component (LUSn) obtained by subtracting the time period (Tn+1) of the next cylinder (n+1) in the ignition sequence from the time period (Tn) of the cylinder (n) to be examined, this difference furthermore being multiplied by a normalization factor (NO),
   - from a dynamic component (LUDn) obtained by subtracting the time period (Tn+y) of the next cylinder (n+y) in the ignition sequence from the time period (Tn-x) of the preceding cylinder (n-x) in the ignition sequence and then negating the sign of this difference, the values x, y, z representing natural numbers > 1 and defining a measuring window (n-x to n+y),
   - from a change component (GLUKn) which is obtained by calculating the value (Tn-z - Tn) - (Tn - Tn+z) and multiplying this value by a weighting factor (BF), this value (LUKn) which has been determined being set to zero if it is negative, and this value (LUKn) then being used to form a sliding average (GLUKn) and a combustion failure being detected if this lack-of-smoothness value (LUn) undershoots a limit value.

2. Method according to Claim 1, characterized in that the limit values ($LUG_n$) are taken from characteristic maps as a function of the load, speed and temperature of the internal combustion engine.

3. Method according to Claim 2, characterized in that, after being read out of the characteristic maps, the limit values ($LUG_n$) are buffer-stored, and a comparison of the lack-of-smoothness value ($LU_n$) calculated for the time period ($T_n$) with the limit value of the lack of smoothness ($LUG_n$) read out for this time period thus takes place.

4. Method according to one of the preceding claims, characterized in that the change component of the lack-of-smoothness value ($GLUK_n$) is subjected to a process of sliding average formation in accordance with the equation:

$$GLUK_n = GLUK_{n-1} * (1\text{-MITKO}) + LUK_n * MITKO,$$

where MITKO represents an averaging constant with a range of values between 0 and 1.

5. Method according to one of the preceding claims, characterized in that the normalization factor (NO) of the static component is calculated as a function of the measuring window (n-x to n+y) of the dynamic component in accordance with the equation NO = x+y.

6. Method according to one of the preceding claims, characterized in that the measuring window (n, n-x, n+y, n-z, n+z) for the calculation of the dynamic component and of the change component is chosen in such a way that the time period of the same mechanical segment of the crankshafts is measured in the case of cylinders n, n-x, n+y, n-z, n+z.

7. Method according to one of the preceding claims, characterized in that the angular range of the crankshaft over which the time periods-are measured is selected in such a way in relation to the top dead centre of the motion of the associated piston that, in the case of an unfavourable operating point, it provides a maximum signal rise in the event of combustion failures.

## Revendications

1. Procédé de détection de ratés de combustion pour un moteur à combustion interne à plusieurs cylindres par mesure des intervalles de temps successifs ($...T_{n-1}$, $T_n$, $T_{n+1}...$), nécessaires au vilebrequin, pendant les temps moteurs des cylindres successifs (...n-1, n, n+1...), pour parcourir un angle donné (KW),
caractérisé en ce que,
on détermine une valeur de l'irrégularité de marche ($LU_n$), composée additivement des éléments suivants :

   - une composante statique ($LUS_n$) que l'on obtient en soustrayant de l'intervalle de temps ($T_n$) du cylindre (n) à examiner, l'intervalle de temps ($T_{n+1}$) d'un cylindre suivant (n+1) dans l'ordre d'allumage, cette différence étant encore multipliée par un facteur de cadrage (NO),
   - une composante dynamique ($LUD_n$), que l'on obtient en soustrayant du temps ($T_{n-x}$) d'un cylindre (n-x) précédant dans l'ordre d'allumage, l'intervalle de temps ($T_{n+y}$) d'un cylindre (n+y) suivant dans l'ordre d'allumage et en inversant ensuite le signe de cette différence, les valeurs x, y, z représentant des entiers positifs supérieurs à 1 et déterminant une fenêtre de mesure (n-x à n+y),
   - une composante de variation ($GLUK_n$), que l'on obtient en calculant la valeur ($T_{n-z}$ - $T_n$) - ($T_n$ - $T_{n+z}$) et en la multipliant par un facteur d'évaluation (BF), cette valeur obtenue ($LUK_n$) étant prise égale à zéro, si elle est négative, puis en calculant une moyenne glissante ($LUKG_n$) de cette valeur ($LUK_n$) et un raté de combustion est détecté si cette valeur de l'irrégularité de marche ($LU_n$) devient inférieure à une valeur limite ($LUG_n$).

2. Procédé selon la revendication 1,
caractérisé en ce que
les valeurs limites ($LUG_n$) sont prélevées dans des diagrammes caractéristiques en fonction de la charge, de la vitesse et de la température du moteur à combustion interne.

3. Procédé selon la revendication 2,
caractérisé en ce que
les valeurs limites ($LUG_n$) sont mises en mémoire temporaire après lecture dans les diagrammes caractéristiques, afin d'effectuer une comparaison de la valeur de l'irrégularité de marche ($LU_n$) calculée pour le temps ($T_n$) avec la valeur limite de l'irrégularité de fonctionnement ($LUG_n$) lue pour le même temps.

4. Procédé selon l'une des revendications précédentes,
caractérisé en ce que ,
la composante de variation de la valeur de l'irrégularité de marche ($GLUK_n$) est soumise à un calcul de moyenne glissante selon la formule :

$$GLUK_n = GLUK_{n-1} * (1\text{-MITKO}) + LUK_n * \text{MITKO},$$

MITKO étant une constante pour le calcul de la moyenne et ayant une valeur comprise entre 0 et 1.

5. Procédé selon l'une des revendications précédentes, caractérisé en ce que,
le facteur de cadrage (NO) de la composante statistique se calcule en fonction de la fenêtre de mesure (n-x à n+y) de la composante dynamique d'après la formule NO = x+y.

6. Procédé selon l'une des revendications précédentes, caractérisé en ce que,
la fenêtre de mesure (n, n-x, n+y, n-z, n+z) pour le calcul de la composante dynamique et de la composante de variation est choisie de manière telle que, pour les cylindres n, n-x, n+y, n-z, n+z, on mesure le temps du même segment mécanique du vilebrequin.

7. Procédé selon l'une des revendications précédentes, caractérisé en ce que
l'angle de rotation du vilebrequin pendant lequel sont mesurés les temps est choisi par rapport au point mort haut du mouvement du piston correspondant de manière à fournir, pour un point de fonctionnement défavorable, une déviation de signal maximale en cas de ratés de combustion.

FIG 1

S1 MESSUNG $T_n$ ← KW

S2 SPEICHERN $T_n$

S3 $LUS_n = MO \cdot (T_n - T_{n+1})$

S4 $LUD_n = (T_{n-3} - T_{n+3})$

← BF

S5 $LUK_n = BF \cdot MAX\{0,((T_{n-3} - T_n) - (T_n - T_{n+3}))\}$

S6 SPEICHERN $LUK_n$

S7 $GLUK_n = GLUK_{n-1} \cdot (1 - MITKO) + LUK_n \cdot MITKO$

S8 $LU_n = LUS_n - LUD_n + GLUK_n$

S9 MESSUNG:
LAST
DREHZAHL
TEMPERATUR

S10 $LUG_n$ AUS KENNFELDERN

S11 SPEICHERN $LUG_n$

S12 $LU_n < LUG_n$

JA / NEIN

S13 AUSSETZER

S14 KEIN AUSSETZER

S15 STATISTIK

FIG 2

LM

$LU_n$ MIT $LUK_n$

$LU_n$ OHNE $LUK_n$

$T_n$

$LUG_n$

I  II  III  IV

FEHLERKENNUNGEN

t